Europäisches Patentamt

European Patent Office

Office européen des brevets

(11) Publication number: **0 481 332 A2**

# EUROPEAN PATENT APPLICATION

(21) Application number: **91117124.7**

(22) Date of filing: **08.10.91**

(51) Int. Cl.5: **H01M 8/12**, G01N 27/416, C04B 35/48

(30) Priority: **08.10.90 JP 270045/90**

(43) Date of publication of application:
**22.04.92 Bulletin 92/17**

(84) Designated Contracting States:
**CH DE FR GB IT LI**

(71) Applicant: **NISSAN CHEMICAL INDUSTRIES LTD.**
**3-7-1, Kanda Nishiki-cho**
**Chiyoda-ku Tokyo(JP)**

(72) Inventor: **Nagamoto, Hidetoshi**
**Tokiwadairadanchi 2-13-306, 7-3, Tokiwadaira**
**Matsudo-shi, Chiba-ken(JP)**
Inventor: **Kaga, Takao, c/o Nissan Chemical**
**Industries, Ltd.**
**Central Research Institute, 722-1, Tsuboi-cho**
**Funabashi-shi, Chiba-ken(JP)**
Inventor: **Kimura, Yutaka, c/o Nissan**
**Chemical Ind., Ltd.**
**Central Research Institute, 722-1, Tsuboi-cho**
**Funabashi-shi, Chiba-ken(JP)**
Inventor: **Obitsu, Masamichi, c/o Nissan**
**Chemical Ind., Ltd.**
**3-7-1, Kanda Nishiki-cho**
**Chiyoda-ku, Tokyo(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) **Solid electrolyte sintered body.**

(57) A solid electrolyte sintered body composed of zirconia and yttria characterized in that temperature change of its electrical conductivity in high temperature range is small.

EP 0 481 332 A2

## BACKGROUND OF THE INVENTION

### Field of the Invention

The present invention relates to a solid electrolyte composed of zirconia and yttria, and more particularly to a solid electrolyte sintered body composed of zirconia and yttria characterized in that temperature change of its electrical conductivity in high temperature range is small.

### Description of the Related Art

A Zirconia solid electrolyte mainly composed of zirconia has excellent merits that it has high oxygen ion conductivity and that electron conduction can be ignored in a wide range of oxygen partial pressure, and its importance as a solid electrolyte used for a solid oxide fuel cell or an oxygen sensor of exhaust gas of a car as been drawing an attention lately. Especially when used for a fuel cell, it is required to have not only high electrical conductivity and high ionic transference number but also to be chemically stable even in a low oxygen partial pressure of fuel electrode side and to have good characteristics as a ceramics in the homogeneity, closeness, mechanical strength and heat resistance. As what satisfies those characteristics, cubic yttria stabilized zirconia (YSZ) that contains yttria by about 8 to 10 mol% shows the highest oxygen ion conductivity among stabilized zirconias and is stable thermally and chemically, so that it has been regarded to be the most important material in practical use and has been reported in various reports (such as "Japan Ceramic Society" vol. 89, No. 1, p. 14, 1981).

Moreover, a tetragonal yttria partially stabilized zirconia (TZP) containing about 2 to 4 mol% of yttria which has been drawing an attention lately as a tough ceramic has excellent mechanical properties though its electrical conductivity is more or less lower than YSZ, so that its application to a solid oxide fuel cell is being considered.

(Proceeding of SOFC(solid oxide fuel cells)-Nagoya, p. 43, 1989).

In order to obtain a fuel cell having high output and high conversion efficiency, the internal resistance determined by ohm resistances of the solid electrolyte, electrode materials, inter-connectors, and current collector or a resistance caused by electrode reactions is desired to be small as lessw as possible. The oxygen ion conduction chracteristics of the conventional yttria stabilized zirconia (YSZ) cannot be said to be enough when it is used for a solid oxide fuel cell. It is because the contribution of the resistance of the solid electrolyte to the internal resistance is relataively large as same as the resistance caused by the electrode reactions, though it also depends on the structure of the fuel cell. As a matter of course, the improvement of the output and the conversion efficiency of the fuel cell is the most important subject in devleoping the solid oxide fuell cell. It is needless to say that how this is achieved with a fuel cell that can be fabricated in relatively low cost is the key whether the fuel cell is widely applied in industries.

In order to reduce the resistance of the solid electrolyte to improve the output and the conversion efficiency of fuel cell, the follows means are adopted:

1) Since the resistance of the solid electrolyte is proportional not only to the resistivity of the material but also to the thickness thereof, the thickness of the solid electrolyte is thinned as much as possible to improve the performance.

2) Since the resistivity of the solid electrolyte is reduced when its temperature is high, the operation temperature of the fuel cell is raised as high as possible.

However, it is difficult to obtain a technologically satisfactory result in either case or in combination of the means 1) and 2). It is because there is naturally a limit, though it is desirable to thin the thickness of the solid electrolyte as less as possible. When the solid electrolyte is extremely thinned, a problem of gas transmission is brought about in the first place.

In order to obtain an electromotive force from the fuel cell as expected from the theoretical value, the transmission of gas, such as oxygen and hydrogen, of the solid electrolyte must be able to be blocked. Therefore, the solid electrolyte needs to be fully close and to have a thickness that allows to block the gas transmission. Then, if the solid electrolyte is made to be fully close, its manufacturing method is also restricted. Moreover, the thinner the solid electrolyte, the more brittle it becomes against mechanical and thermal stresses, so that it must be considered to reinforce it using adequate supports from a certain point. Then it ends up adding another limit on the structure of the fuel cell. That is, there are limits practically in thinning the thickness of the solid electrolyte.

Next, as for the operation temperature of the fuel cell, the higher temperature provides considerably a large merits.

It is because the resistance due to the electrode reactions is considered to become small, beside that the resistivity of the solid electrolyte is reduced as described above. About 900 to 1000° C of operation temperature is considered to be appropriate, considering the limits in thinning the solid electrolyte in the prior art. However, peripheral materials including the electrode materials need to be able to sustain and to be used in such relatively high temperature range and thereby are subject to restriction in their selection. The peripheral materials are also required to have a consistency in coefficient of thermal expansion with the solid electrolyte and a high electrical conductivity, beside the heat resistance. Due to that, it has become a considerably difficult technological problem to develop the peripheral materials that satisfy those requirements and are still in low cost.

The tetragonal yttria partially stabilized zirconia (TZP) is also being considered to be applied for the solid oxide fuel cell because it has excellent mechanical properties, though its electrical conductivity is more or less low comparing to YSZ. That is, TZP is considered to be able to sustain handling when it is incorporated in a unit in reality even when its thickness is considerably thinned to reduce its substantial resistance. However, the technological problems caused by the resistance of the solid electrolyte are almost the same with the case of the stabilized zirconia (YSZ).

That is, the reality is that the ion conduction characteristics is not necessarily sufficient in the tetragonal partially stabilized zirconia in which about 3 mol% of yttria is added, in the cubic stabilized zirconia in which about 8 to 10 mol% of yttria is added or even in zirconia in which tetragonal and cubic stabilized zirconia are mixed with about 3 to 8 mol% of yttria.

It is also important in practical use that the temperature dependency (activation energy) of the electrical conductivity of the solid electrolyte is small. For example, even when there is an inevitable temperature distribution within a fuel cell unit, its influence on the output characteristic is small. Also when the operation temperature of the fuel cell is lowered, the increase of the resistance of the solid electrolyte is small and the influence on the output characteristic is small. That is, when the operation temperature is lowered from 1000° C to 800° C for example, the increase of the resistance of the solid electrolyte becomes as follows depending on the value of the activation energy. When the activation energy is 0.6 eV, the increase is 2.77 times; when 0.7 eV, 3.29 times; when 0.8 eV, 3.89 times; and when 0.9 eV, 4.61 times. Then, considering based on 0.6 eV for example, the increase rate of the resistance when the activation energy is 0.7 eV, 0.8 eV and 0.9 eV is respectively 19 %, 40 % and 60 % increase.

These values are by no means small considering the loss of power generation by the resistance of the solid electrolyte and the value of the activation energy is preferred to be less than 0.8 eV or more desirably less than 0.7 eV.

In enables to design a fuel cell whose operation temperature is relatively low and to widen the selection of the peripheral materials. For example, metallic materials which are considered to be difficult to be used in around 1000° C can be considered as a candidate of the peripheral materials.

As described above, the improvement of the ion conduction characteristics of solid electrolyte material is a big plus in developing a solid oxide fuel cell.

In the present invention, it has been discovered that in manufacturing a solid electrolyte sintered body, a solid electrolyte sintered body that has a high electrical conductivity in high temperature range and whose temperature change of the electrical conductivity in the high temperature range is small can be obtained by using high purity easy-to-sinter raw material powder in which yttria, a stabilizer, is homogeneously solid-solubilized, by molding and sintering it in relatively low temperature to homogenize the distribution of the grain size of the sintered body obtained.

Accordingly, it is an object of the present invention to obtain the solid elelctrolyte sintered body which has a high electrical conductivity in high temperature range and in which the tempeature dependency of the electrical conductivity is small.

## SUMMARY OF THE INVENTION

The present invention is concerned with a zirconia sintered body mainly composed of zirconia and yttria and more particularly with a solid electrolyte sintered body characterized in that the mol ratio of yttria and zirconia is in ranges of 2/98 to 10/90 and that temperature change of its electrical conductivity in high temperature range is small.

The solid electrolyte sintered body of the present invention can be obtained by using high purity easy-to-sinter raw material powder in which yttria, a stabilizer, is homogenously solid-solubilized in the range of 2/98 to 10/90 of mol ratio of yttria and zirconia, by molding and sintering it in relataively low temperature to homogenize the distribution of the grain size of the sintered body obtained.

The high purity zirconia raw material powder in the present invention is what the amount of impurities other than hafnium that normally comes together with zirconia and yttria used as the stabilizer is reduced.

The powder in which yttria is homogeneously solid-solubilized can be obtained by fully calcinating for a long time in high temperature in such known methods for producing the raw material powder as wet powder blending, coprecipitation, hydrolysis, alkoxide hydrolysis or a method disclosed in Japanese Patent Application Laid-Open No. 63-185821.

However, when the calcination temperature is too high, the sintering property of the particle of the powder is damaged and it becomes necessary to strongly pulverize the powder for a long time after the calcination to obtain a fully close sintered body. Then, during when strongly pulverizing it for a long time, impurities from the pulverizing container or the pulverizing media inevitably contaminates it and a desirable result cannot be obtained. Due to that, to accelerate the solid-solubilization of yttria, the preferable calcination tempeature is from 900 to 1100° C or more preferably from 950 to 1050° C or further from 1000 to 1050° C and the preferable calcination time is more than 2 hours in total, or more preferably more than 4 hours or further more than 8 hours. In order to accelerate the solid-solubilization of yttria, the better method which is more effective is to calcinate plural times, for example, to calcinate 2 times for 6 hours or 3 times for 4 hours rather than 1 time for 12 hours. When the calcination temperature is higher than 1100° C, agglomeration of the powder particle becomes intense, though it depends on the production method of the powder, an it becomes difficult to make it agglomeration free by pulverizintg to make ease-to-sinter powder having less agglomeration. When the calcination temperature is lower than 900° c, it takes too much time for homogeneously solubilizing yttria and is not economical. When the calcination time is less than 2 hours, the calcination temperature for homogeneously solubilizing yttria becomes too high and a desirable result cannot be obtained. The powder in which yttria is homogeneously solid-solubilized according to the present invention allows the agglomeration of the powder calcinated as described above to be unbinded by the pulverizing method normally implemented to make easy-to-sinter powder. In crushing the powder, it is preferable to fully pulverize in a range in which the contamination of impurities from the pulverizing container or the pulverizing media can be ignored. For example, in pulverizing by a ball mill, it is preferable to pulverize more than 12 hours or more preferably more than 24 hours and to use high purity and less wearing zirconia-made media. As for the upper limit time of the pulverizing, the pulverizing may be carried out while measuring the particle size of the powder by centrifugal sedimentation for example. The pulverizing is then stopped when the change saturates.

By using the easy-to-sinter high purity raw material powder in which yttria is homogeneously solid-solubilized thus obtained, by molding it using normal methods such as die-pressing tape casting, slip casting or extrusion molding and by sintering in relatively low temperature of 1350 to 1550° C or more preferably in 1400 to 1500° C, the sintered body which is fully close and the distribution of the grain size is homogenous can be obtained. When the sintering tempeature is too high, the grain of the sintered body abnormally grow and it ends up effecting on the ion conduction characteristics of the solid electrolyte sintered body. When the sintering temperature is too low, a sintered body having enough closeness cannot be obtained and the problem of gas transmission described before is brought about. The distribution of the grain size of the zirconia sintered body is preferable to be homogenous as much as possible and its coefficient of variation is preferable to be less than 80 % or more preferably to be less than 60 % or further to be less than 40 %.

Moreover, in order to increase the purity of the raw material powder obtained in the present invention, high purity raw material may be used for the raw material used in the production of the powder and the raw material may be refined as necessary in addition to the the method described above. By reducing the amount of impurities contained in the zirconia powder to less than 0.5 % or preferably to less than 0.2 % or further to less than 0.05%, the contribution of the resistance by the intergranular components of the solid electrolyte sintered body obtained can be sustantially eliminated.

The zirconia sintered body of the present invention thus obtained is characterized in that it has high electrical conductivity in high temperature range and that the temperature change of the electrical conductivity in high temperature range is small.

By the way, the ion conduction chraracteristics of the solid electrolyte of the solid electrolyte sintered body was evaluated by keeping the solid electrolyte in a certain temperature to measure the resistance value by a normal AC impedance method. In this case, the whole resistance of the solid electrolyte is divided into contributions of a bulk resistance which is a resistance component of the solid electrolyte's own and of a component of intergranular resistance caused by the impurities that is maldistributed at the grain boundary.

Moreover, in low frequency range of a measuring AC frequency, it is possible to find resistance components caused by the electrode reaction in the atmosphere.

BRIEF DESCRIPTION OF THE DRAWINGS

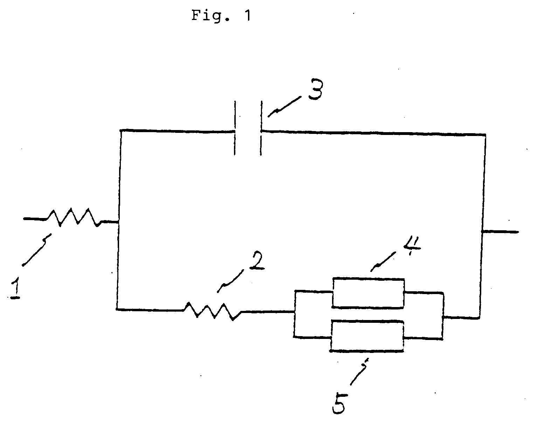

Fig. 1 is a circuit diagram of an equivalent circuit used for parameter fitting, wherein the numeral (1) denotes a solid electrolyte resistance ($R_{SE}$), (2) a charge transfer resistance ($R_{CT}$), (3) an interface capacitance (Ci), (4) an impedance ($Z_{W1}$), and (5) another impedance ($Z_{W2}$).

DETAILED DESCRIPTION OF THE PREFERRED EMBODIMENTS

Describing now to the preferred embodiment, the present invention will be explained in detail.

(First Embodiment)

A powder before calcination in which 3 mol% of yttria had been added obtained by the method in Japanese Patent Application Laid-Open No. 63-185821 was used and was calcinated two times keeping its temperature at 1050° C for 3 hours. The calcinated powder was pulverized for 24 hours using a ball mill. BET specific surface area of the powder after the pulverization was 9.5 $m^2$/g and its average particle size by means of centrifugal sedimentation was 0.2 $\mu$ m.

An acrylic resin binder was added to the powder to glanulate. It was then uniaxially die-pressed under 1t/ $cm^2$ of pressure and was sintered for two hours at 1450° C.

The thickness of the zirconia sintered body obtained was about 0.5 mm. On this sintered body platinum elecltrode is attached by vapor deposition, and further on that electrode is appled platinum paste and it was sintered at 1150° C. An electrode with 0.64 $cm^2$ of area was disposed at the lower part of the specimen and another electrode with 0.36 $cm^2$ was disposed at the upper part of the specimen. The effective geometric area of the electrodes was 0.49 $cm^2$ . When the resistance value of the solid electrolyte sintered body was measured by the AC impedance method while keeping its temperature constant in an atmosphere of an electric furnace, almost no contribution of the intergranular resistance was seen and the following result was obtained:

| Temperature | Resistance | Electrical Conductivity |
|---|---|---|
| 651° C | 30.5 $\Omega$ | 3.4 x $10^{-3}$ $\Omega^{-1}$ $cm^{-1}$ |
| 751° C | 12.9 $\Omega$ | 8.0 x $10^{-3}$ $\Omega^{-1}$ $cm^{-1}$ |
| 848° C | 7.3 $\Omega$ | 1.4 x $10^{-2}$ $\Omega^{-2}$ $cm^{-1}$ |

No time change was seen in these values even after 20 times of repeated measurements. The 20 times of measurements was equivalent to 60 hours of use time in total.

When an activation energy of the electrical conductivity was found from the above values by the following expression:

$$\sigma = Aexp(-E/RT)$$

where $\sigma$ : electrical conductivity, A: frequency factor, E: activation energy and T: absolute temperature. Then the activation energy turned out to be 0.65 eV.

The above result is shown in Table 1 below. It shows distinctive characters that it is smaller than the activation energy of the electrical conductivity reported in the past and that the temperature change of the electrical conductivity is small.

After measureing the AD impedance, the zirconia sintered body was cut, a specular polishing was implemented on it and thermal etching was carried out for one hour at 1360° C. The polished surface was observed by a scanning electron microscope. The distributiion of the grain size of the sintered body was found from SEM photographs. Each area on the phto of more than 100 grain arbitrary selected was found and grain size of each grain was found by circular approximation. The average grain size obtained was 0.2 $\mu$ m.

The coefficient of variation was found to be 35 % from those values.

(Second Embodiment)

A zirconia sintered with 0.5 mm of thickness was obtained in the same way with the first embodiment except that 8 mol% of yttria was added. Similarly again when the electrode was baked and a measurement was carried out by the AC impedance method, almost no contribution of the intergranular resistance was seen and the following result was obtained:

| Temperature | Resistance | Electrical Conductivity |
|---|---|---|
| 644 ° C | 16.6Ω | $6.2 \times 10^{-3}\ \Omega^{-1}\ cm^{-1}$ |
| 746 ° C | 6.7Ω | $1.5 \times 10^{-2}\ \Omega^{-1}\ cm^{-1}$ |
| 843 ° C | 4.2Ω | $2.4 \times 10^{-2}\ \Omega^{-1}\ cm^{-1}$ |

No time change due to repetitive measurements was seen also in these values and they were good.

When an activation energy of the electrical conductivity was found from the above values in the same way as in the first embodiment, it was 0.61 eV, which was smaller than the activation energy of the electrical conductivity reported in the past.

Moreover, although the grain size of the sintered body obtained was larger than the one in which 3 mol% of yttria was added, its distribution was similarly homogenous.

## Table 1: Comparison of Activation Energy

| | Activation energy (eV) | | References |
|---|---|---|---|
| | $\sigma$ | $\sigma$ T | |
| First Embodiment | 0.65 | 0.74 | |
| Second Embodiment | 0.61 | 0.70 | |
| Prior Example 1 | 0.87*[1] | – | (1) |
| Proir Example 2 | 0.8 | – | (2) |
| Prior Example 3 | – | 1.04 to 1.11 | (3) |
| Prior Example 4 | – | 0.92 to 1.17 | (4) |
| Prior Example 5 | 0.8 | | (5) |
| Prior Example 6 | 0.7*[2] | | (6) |

(1) "The Element of Chemistry" vol. 37, p. 214, 1982

   *1: Reduced from 20 kcal/mol.

(2) "Advances in Ceramics" vol. 12, pp. 555-557, 1984

The minimum value in the range when about 4 to 35 mol% of yttria is added (yttria 7 to 10 mol%)

(3) "Japan Ceramic Society" vol. 89, No. 1, pp. 6-14, 1981

Note: The activation energy is found by the next expression:

$$\sigma T = A\exp(-W/RT)$$

where $\sigma$: electric conductivity, T: absolute temperature, A: frequency factor and W: activation energy.

YSZ sintered body 8 mol%

The value obtained similarly calculating the embodiment is written in the item $\sigma T$.

(4) "Proceeding of SOFC-Nagoya" p. 43, 1989

As the activation energy of $\sigma T$ similarly to Item (3), values of 0.92 eV (bulk) and 1.17 eV (intergranular) are shown for the TZP with 3 mol% of yttria. Therefore, the activation energy of the whole resistance combining the bulk and the intergranular resistances is considered to be in between 0.92 eV and 1.17 eV.

(5) "Ceramics" vol.25, No. 7, pp. 614-620, 1990

Yttria 9 mol%

(6) "Summary of The 3rd International Conference on the Science and Technology of Zirconia" (1P31) pp. 112-113, 1986

YSZ sintered body yttria 3 mol%

*2: Measured value of only bulk resistance.

(Third Embodiment)

The zirconia solid electrolyte sintered body added with 3.0 mol yttria which was obtained as well as in Example 1, was deposited with platinum electrode in the same way with the Example 1. An electrode with 0.64 cm$^2$ of aera was disposed to the anode side and two electrodes with 0.36 cm$^2$ of area respectively was disposed to the cathode side. In order to evaluate the resistance due to the electrode reaction in a condition in which direct current is actual flown to the solid electrolyte sintered body to generate overpotential, measurement by means of the AC impedance method was carried out in the above electrode structure. In the measurement of the resistance of the electrode reaction by means of the AC impedance method, the conditions of the two electrodes through which AC is applied is desired to be equal. Accordingly, direct current was flown in 5 mA cm$^{-2}$ of current density so that both of the two elecltrodes at the cathode side would become cathodic atmosphere at 751 ° C to equalize the both to 12 mV of overpotential. Then the AC impedance was measured by reducing the oxygen partial pressure to 0.1 atmospheric pressure which is considered to be the lower limit in practical use. As a result, the value of the electrode resistance became 6.7 Ω , which was very small and good. Moreover, no time change was seen after repeated measurements.

For the analysis of the complex impedance plot obtained, models were established by the following assumptions and each component was found by implementing parameter fitting based on an equivalent circuit (see Fig. 1) derived from the models.

1) derived from the models.

  - A charge transfer reaction takes place at the three phases of boundary electrode-solid electrolyte-gaseous phase. - Adsorped oxygen atoms are supplied to the triple phase boundary by two diffusion paths of the surface of the electrode and the surface of the solid electrolyte.
  - There exists an interface capacitance

The equivalent circuit can be obtained by the combination of the resistance of the solid electrolyte ($R_{SE}$), a resistance of charge transfer ($R_{CT}$), diffusion resistances ($R_{D1}$, $R_{D2}$) and an interface capacitance (Ci) and the following expressions:

$$Z_1 = R_{D1} * \frac{\tanh(\gamma_1 \, \omega^{1/2} \, (1 + j))}{\gamma_1 \, \omega^{1/2} \, (1 + j)}$$

$$Z_2 = R_{D2} * \frac{\tanh(\gamma_2 \, \omega^{1/2} \, (1 + j))}{\gamma_2 \, \omega^{1/2} \, (1 + J)}$$

$\gamma_1 = \delta_1 /(2D)^{1/2}$
$\gamma_2 = \delta_2 /(2D)^{1/2}$

where $\delta_1, \delta^2$ ; diffusion length of each diffusion path, D; diffusion constant, $\omega$ ; angular velocity.

The constribution in which R$_{CT}$, Z$_{W1}$, Z$_{W2}$ and Ci are combined becomes the electrode resistance R$_{EL}$ in Fig. 1.

From the analysis of the complex impedance plot, a very good result was obtained that the charge transfer resistance ($R_{CT}$) is so small that it can be ignored.

A relationship of the direct current density and the overpotential in stationary time was found by a normal current interruption method by setting one cathode as a reference electrode. The resistance value obtained from the inclinations or tangent lines of the curves of the direct current density and the overpotential was almost equal with the result of the AC impedance method.

**Claims**

1. A solid electrolyte sintered body characterized in that it is a zirconia sintered body mainly composed of zirconia and yttria, that a mol ratio of said yttria and said zirconia is in a range from 2/98 to 10/90 and that the temperature change of its electrical conductivity in high temperature range is small.

2. The solid elecltrolyte sintered body according to Claim 1, wherein amount of impurities contained is less than 0.5% and the coefficient of variation in distribution of grain size of said sintered body is less than 80%.

Fig. 1